(19) **Europäisches Patentamt**
**European Patent Office**
**Office européen des brevets**

(11) **EP 4 287 585 A1**

(12) **EUROPEAN PATENT APPLICATION**
published in accordance with Art. 153(4) EPC

(43) Date of publication:
**06.12.2023 Bulletin 2023/49**

(21) Application number: **21927644.1**

(22) Date of filing: **25.11.2021**

(51) International Patent Classification (IPC):
**H04L 67/00** *(2022.01)*

(52) Cooperative Patent Classification (CPC):
**H04L 67/00; H04L 67/12; H04L 67/146; H04L 67/30; H04L 69/18; H04W 4/40**

(86) International application number:
**PCT/CN2021/133280**

(87) International publication number:
**WO 2022/179220 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.02.2021 CN 202110206223**

(71) Applicant: **Huawei Technologies Co., Ltd.**
**Shenzhen, Guangdong 518129 (CN)**

(72) Inventors:
• **ZHANG, Jing**
  **Shenzhen, Guangdong 518129 (CN)**
• **ZHAN, Yongqiang**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **DATA COMMUNICATION PROCESSING METHOD AND DEVICE**

(57)  Embodiments of this application disclose a data communication processing method and a device. The method includes: A server obtains a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the server. The server searches for the first communication protocol based on the identifier of the first vehicle. In this application, data sent by a vehicle based on various different communication protocols can be parsed at low costs and flexibly.

301: A server obtains a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the server

302: The server searches for the first communication protocol based on the identifier of the first vehicle

FIG. 3

**EP 4 287 585 A1**

**Description**

This application claims priority to Chinese Patent Application No. 202110206223.3, filed with the China National Intellectual Property Administration on February 24, 2021 and entitled "DATA COMMUNICATION PROCESSING METHOD AND DEVICE", which is incorporated herein by reference in its entirety.

**TECHNICAL FIELD**

This application relates to the field of data communications technologies, and specifically, to a data communication processing method and a device.

**BACKGROUND**

A concept of the Internet of Vehicles originates from the Internet of Things, and is also referred to as a network in which vehicles are connected to each other. The Internet of Vehicles uses a next-generation information communication technology to implement comprehensive network connections between a vehicle and a server, between vehicles, and between a vehicle and a roadside device. The Internet of Vehicles uses a sensing technology to sense vehicle status information, and uses a wireless communication network and a modern intelligent information processing technology to implement intelligent traffic management, intelligent decision making for a traffic information service, and intelligent control for a vehicle. During collection of the vehicle status information, performance of a communication system is considered, the vehicle communicates with the server through a binary code stream. Therefore, a transmission format of the binary code stream needs to be agreed on in advance based on a communication protocol of the Internet of Vehicles. The vehicle collects vehicle data according to the communication protocol and sends the vehicle data to the server. The server converts, according to the communication protocol, the binary code stream sent by the vehicle into corresponding data.

However, with development of the Internet of Vehicles, automobile enterprises launch more different communication protocols of the Internet of Vehicles. Therefore, how to parse data sent according to various different communication protocols by a vehicle at low costs and flexibly is a technical problem that needs to be urgently resolved by persons skilled in the art.

**SUMMARY**

This application provides a data communication processing method and a device, so that data sent by a vehicle based on various different communication protocols can be parsed at low costs and flexibly.

According to a first aspect, this application provides a data communication processing method, and the method includes:

A server obtains a configuration file and an identifier of a first vehicle, and searches for a first communication protocol based on the identifier of the first vehicle. The configuration file is used to configure the first communication protocol, the identifier of the first vehicle is associated with the first communication protocol, and the first communication protocol is a rule for the first vehicle to collect data of the first vehicle and/or send collected data to the server.

In the Internet of Vehicles, a rule for collecting data of a vehicle and a rule for reporting data to a server may be specified based on a communication protocol. Due to diversity of automobile enterprises, different vehicles may use different communication protocols. In this application, a plurality of different communication protocols may be configured in the server, and a communication protocol used by a vehicle is associated with an identifier of the corresponding vehicle, so that the server can determine, based on the identifier of the vehicle, the communication protocol used by the vehicle, and can correctly parse, based on the communication protocol used by the vehicle, data reported by the vehicle. In this application, complex parsing code does not need to be deployed for a specific communication protocol. This greatly saves human and material resources, saves storage resources and computing resources of a server, and improves service rollout efficiency. In addition, a data parsing service provided by the server in this application can well adapt to various different vehicle manufacturers, and has good reusability. In addition, because different parsing code does not need to be deployed based on different protocols, frequent upgrade and update are not needed, and maintainability is better.

In a possible implementation, the configuration file is stored in the server in a form of a preset model, and the preset model includes expression forms of data types in a plurality of different communication protocols.

In this application, the preset model is applicable to a plurality of different communication protocols, so that the server may configure and store the plurality of different communication protocols, thereby making it possible to implement the foregoing service of parsing data reported by a vehicle at low costs and flexibly.

In a possible implementation, the data types include a validity data type, a status data type, a value data type, and a string data type.

In this application, considering richness of data types in a communication protocol, the preset model includes a string data type. The string data type is an extended data type provided in this application, so that this application can be applied to scenarios of more communication protocols.

In a possible implementation, the method further includes: The server determines that the configuration file meets a preset rule, where the preset rule is used to determine rationality of content of the configuration file.

In this application, the rationality of the configuration file corresponding to the communication protocol is checked, so that data reported by the vehicle can be correctly parsed subsequently based on the protocol, thereby reducing a probability of a parsing error.

In a possible implementation, that the server determines that the configuration file meets a preset rule includes: The server determines that a maximum value of first data in the configuration file is not greater than a specified maximum value, and determines that a minimum value of the first data is not less than a specified minimum value.

The first data may be data of a value data type, and the value data type may be, for example, a value type.

In a possible implementation, that a server obtains a configuration file includes: The server receives registration information of the first vehicle, where the registration information includes the configuration file.

In this application, the configuration file of the communication protocol is carried in the registration information of the vehicle and sent to the server, so that a quantity of times that the server receives information can be reduced, and computing and communication resources can be saved.

According to a second aspect, this application provides a data communication processing method, and the method includes:

A server obtains a configuration file and an identifier of a first communication protocol, and searches for the first communication protocol based on the identifier of the first communication protocol. The configuration file is used to configure the first communication protocol. The first communication protocol is a rule for a first vehicle to collect data of the first vehicle and/or send collected data to the server.

In the Internet of Vehicles, a rule for collecting data of a vehicle and a rule for reporting data to a server may be specified based on a communication protocol. Due to diversity of automobile enterprises, different vehicles may use different communication protocols. In this application, a plurality of different communication protocols may be configured in the server, and different communication protocol identifiers are configured for the different communication protocols, so that the server can determine, based on the obtained communication protocol identifier, a communication protocol used by the vehicle, and can correctly parse, based on the communication protocol used by the vehicle, data reported by the vehicle. Compared with an existing solution, in this application, complex parsing code does not need to be deployed for a specific communication protocol. This greatly saves human and material resources, saves storage resources and computer resources of a server, and can improve service rollout efficiency. In addition, a data parsing service provided by the server in this application can well adapt to various different vehicle manufacturers, and has good reusability. In addition, because different parsing code does not need to be deployed based on different protocols, frequent upgrade and update are not needed, and maintainability is better.

In a possible implementation, that a server obtains an identifier of a first communication protocol includes: The server receives the identifier of the first communication protocol from the first vehicle.

In this application, the identifier of the communication protocol obtained by the server is sent by the vehicle to the server, so that the server can find, based on the identifier of the communication protocol, the communication protocol used by the vehicle.

In a possible implementation, the configuration file is stored in the server in a form of a preset model, and the preset model includes expression forms of data types in a plurality of different communication protocols.

In this application, the preset model is applicable to a plurality of different communication protocols, so that the server may configure and store the plurality of different communication protocols, thereby making it possible to implement the foregoing service of parsing data reported by a vehicle at low costs and flexibly.

In a possible implementation, the method further includes: The server determines that the configuration file meets a preset rule, where the preset rule is used to determine rationality of content of the configuration file.

In this application, the rationality of the configuration file corresponding to the communication protocol is checked, so that data reported by the vehicle can be correctly parsed subsequently based on the protocol, thereby reducing a probability of a parsing error.

According to a third aspect, this application provides a data communication processing method. The method includes: A first vehicle sends an identifier of the first vehicle to a server, where the identifier is used to search for a first communication protocol, and the first communication protocol is a rule for the first vehicle to collect data of the first vehicle and/or send collected data to the server.

In this application, in the server, the identifier of the vehicle is associated with the communication protocol used by the vehicle, and the vehicle sends the identifier of the vehicle to the server, so that the server can find, based on the identifier of the vehicle, the communication protocol used by the vehicle, so as to correctly parse data subsequently reported by the vehicle.

According to a fourth aspect, this application provides a data communication processing method. The method includes: A first vehicle sends an identifier of a first communication protocol to a server, where the identifier is used to search for the first communication protocol, and the first communication protocol is a rule for the first vehicle to collect data of the first vehicle and/or send collected data to the server.

In this application, in the server, the communication protocol used by the vehicle is associated with the identifier of the communication protocol, and the vehicle sends the identifier of the communication protocol used by the vehicle to the server, so that the server can find, based on the identifier, the communication protocol used by the vehicle, and can correctly parse data subsequently reported by the vehicle.

According to a fifth aspect, this application provides a server. The server includes:

an obtaining unit, configured to obtain a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the server; and

a searching unit, configured to search for the first communication protocol based on the identifier of the first vehicle.

In a possible implementation, the server further includes:

a processing unit, configured to determine that the configuration file meets a preset rule, where the preset rule is used to determine rationality of content of the configuration file.

Optionally, the server may further include a receiving unit and a storage unit. The storage unit is configured to store data or computer instructions. The receiving unit is configured to receive a message or data.

In addition, in this aspect, for another optional implementation of the server, refer to related content in the first aspect. Details are not described herein again.

In an example, the receiving unit may be a transceiver or an interface, the storage unit may be a memory, and the processing unit may be a processor.

According to a sixth aspect, this application provides a server. The server includes:

an obtaining unit, configured to obtain a configuration file and an identifier of a first communication protocol, where the configuration file is used to configure the first communication protocol, and the first communication protocol is a rule for a first vehicle to collect data of the first vehicle and/or send collected data to the server; and

a searching unit, configured to search for the first communication protocol based on the identifier of the first communication protocol.

In a possible implementation, the server further includes:

a processing unit, configured to determine that the configuration file meets a preset rule, where the preset rule is used to determine rationality of content of the configuration file.

Optionally, the server may further include a receiving unit and a storage unit. The storage unit is configured to store data or computer instructions. The receiving unit is configured to receive a message or data.

In addition, in this aspect, for another optional implementation of the server, refer to related content in the second aspect. Details are not described herein again.

In an example, the receiving unit may be a transceiver or an interface, the storage unit may be a memory, and the processing unit may be a processor.

According to a seventh aspect, this application provides a vehicle. The vehicle includes:

a sending unit, configured to send an identifier of the vehicle to a server, where the identifier is used to search for a first communication protocol, and the first communication protocol is a rule for the vehicle to collect data of the vehicle and/or send collected data to the server.

Optionally, the server may further include a storage unit, and the storage unit is configured to store data or computer instructions.

In an example, the sending unit may be a transceiver or an interface, and the storage unit may be a memory.

According to an eighth aspect, this application provides a vehicle. The vehicle includes:

a sending unit, configured to send an identifier of a first communication protocol to a server, where the identifier is used to search for the first communication protocol, and the first communication protocol is a rule for the vehicle to collect data of the vehicle and/or send collected data to the server.

Optionally, the server may further include a storage unit, and the storage unit is configured to store data or computer instructions.

In an example, the sending unit may be a transceiver or an interface, and the storage unit may be a memory.

According to a ninth aspect, this application provides a server. The server may include a processor and a memory, configured to implement the data communication processing method described in the first aspect. The memory is coupled to the processor. When executing the computer program stored in the memory, the processor may implement the method according to any one of the first aspect or the possible implementations of the first aspect. The server may further include a communication interface. The communication interface is used by the server to communicate with another server. For example, the communication interface may be a transceiver, a circuit, a bus, a module, or a communication interface of another type.

In a possible implementation, the server may include:

the memory, configured to store a computer program; and

the processor, configured to: obtain a configuration file and an identifier of a first vehicle, and search for a first communication protocol based on the identifier of the first vehicle. The configuration file is used to configure the first communication protocol. The identifier of the first vehicle is associated with the first communication protocol. The first communication protocol is a rule for the first vehicle to collect data of the first vehicle and/or send collected data to the server.

It should be noted that the computer program in the memory in this application may be pre-stored, or may be downloaded from the Internet and then stored by using the server. A source of the computer program in the memory is not specifically limited in this application. Couplings in embodiments of this application are indirect couplings or connections between apparatuses, units, or modules for information exchange between the apparatuses, the units, or the modules, and may be in electrical, mechanical, or other forms.

According to a tenth aspect, this application provides a server. The server may include a processor and a memory, configured to implement the data communication processing method described in the second aspect. The memory is coupled to the processor. When executing the computer program stored in the memory, the processor may implement the method according to any one of the second aspect or the possible implementations of the second aspect. The server may further include a communication interface. The communication interface is used by the server to communicate with another server. For example, the communication interface may be a transceiver, a circuit, a bus, a module, or a communication interface of another type.

In a possible implementation, the server may include:

the memory, configured to store a computer program; and
the processor, configured to: obtain a configuration file and an identifier of a first communication protocol, and search for the first communication protocol based on the identifier of the first communication protocol. The configuration file is used to configure the first communication protocol. The first communication protocol is a rule for a first vehicle to collect data of the first vehicle and/or send collected data to the server.

It should be noted that the computer program in the memory in this application may be pre-stored, or may be downloaded from the Internet and then stored by using the server. A source of the computer program in the memory is not specifically limited in this application. Couplings in embodiments of this application are indirect couplings or connections between apparatuses, units, or modules for information exchange between the apparatuses, the units, or the modules, and may be in electrical, mechanical, or other forms.

According to an eleventh aspect, this application provides a vehicle. The vehicle includes a processor, a memory, and a communication interface, configured to implement the data communication processing method described in the third aspect. The memory is coupled to the processor. When executing the computer program stored in the memory, the processor may invoke the communication interface to implement the method according to the third aspect. The communication interface is used by the server to communicate with another server. For example, the communication interface may be a transceiver, a circuit, a bus, a module, or a communication interface of another type.

It should be noted that the computer program in the memory in this application may be pre-stored, or may be downloaded from the Internet and then stored by using the server. A source of the computer program in the memory is not specifically limited in this application. Couplings in embodiments of this application are indirect couplings or connections between apparatuses, units, or modules for information exchange between the apparatuses, the units, or the modules, and may be in electrical, mechanical, or other forms.

According to a twelfth aspect, this application provides a vehicle. The vehicle includes a processor, a memory, and a communication interface, configured to implement the data communication processing method described in the fourth aspect. The memory is coupled to the processor. When executing the computer program stored in the memory, the processor may invoke the communication interface to implement the method according to the fourth aspect. The communication interface is used by the server to communicate with another server. For example, the communication interface may be a transceiver, a circuit, a bus, a module, or a communication interface of another type.

It should be noted that the computer program in the memory in this application may be pre-stored, or may be downloaded from the Internet and then stored by using the server. A source of the computer program in the memory is not specifically limited in this application. Couplings in embodiments of this application are indirect couplings or connections between apparatuses, units, or modules for information exchange between the apparatuses, the units, or the modules, and may be in electrical, mechanical, or other forms.

According to a thirteenth aspect, this application provides a system. The system includes one or more servers, and the server is the server according to the ninth aspect or the tenth aspect.

According to a fourteenth aspect, this application provides a computer-readable storage medium. The computer-readable storage medium stores a computer program, and the computer program is executed by a processor to implement the method according to any one of the first aspect; or the computer program is executed by a processor to implement the method according to any one of the second aspect; or the computer program is executed by a processor to implement the method according to the third aspect; or the computer program is executed by a processor to implement the method according to the fourth aspect.

According to a fifteenth aspect, this application provides a computer program product. When the computer program product is executed by a processor, the method according to any one of the first aspect is performed; or when the computer program product is executed by a processor, the method according to any one of the second aspect is performed; or when the computer program product is executed by a processor, the method according to the third aspect is performed; or when the computer program product is executed by a processor, the method according to the fourth aspect is performed.

The solutions provided in the fifth aspect to the fifteenth aspect are used to implement or cooperate to implement the methods correspondingly provided in the first aspect to the fourth aspect, and therefore can achieve same or corresponding beneficial effects as the corresponding methods in the first aspect to the fourth aspect. Details are not described herein again.

**BRIEF DESCRIPTION OF DRAWINGS**

The following briefly describes the accompanying drawings for embodiments of this application.

FIG. 1 is a schematic diagram of a format of data reported by a terminal device to a server;
FIG. 2 is a schematic diagram of a system architecture to which a data communication processing method is applicable according to an embodiment of this application;
FIG. 3 is a schematic flowchart of a data communication processing method according to an embodiment of this application;
FIG. 4 is a schematic flowchart of another data communication processing method according to an embodiment of this application;
FIG. 5 to FIG. 8 each are a flowchart of interaction between devices according to an embodiment of this application;
FIG. 9 to FIG. 12 each are a schematic diagram of a logical structure of an apparatus according to an embodiment of this application; and
FIG. 13 to FIG. 15 each are a schematic diagram of a hardware structure of a device according to an embodiment of this application.

**DESCRIPTION OF EMBODIMENTS**

For ease of understanding, the following first describes technical terms in embodiments of this application.

It should be noted that a first communication protocol in embodiments of this application is a rule for a terminal device to collect data of the terminal device and/or send collected data to a server. For example, the first communication protocol may be a CAN bus communication protocol or the like. In descriptions of the following embodiments, an example in which the first communication protocol is a CAN bus communication protocol is mainly used for description. This does not constitute a limitation on this application. The first communication protocol described in this application may be another communication protocol that meets a definition that "a first communication protocol is a rule for a terminal device to collect data of the terminal device and/or send collected data to a server".

1. Controller area network (controller area network, CAN)

The CAN is designed as a microcontroller communication system in a vehicle environment, exchanges information between components of a vehicle, and forms a vehicle electronic control network. For example, a CAN control apparatus is embedded in each of an engine management system, a speed box controller, an instrument device, and an electronic trunk system.

High performance and reliability of the CAN have been recognized. In addition to the automobile field, the CAN is also widely used in industrial automation, ships, medical equipment, and industrial equipment. A field bus is one of the hot spots in current development of the field of automation technologies, and is known as a computer local area network in the field of automation. The CAN provides powerful technical support for a distributed control system to realize real-time and reliable data communication between nodes.

2. CAN data

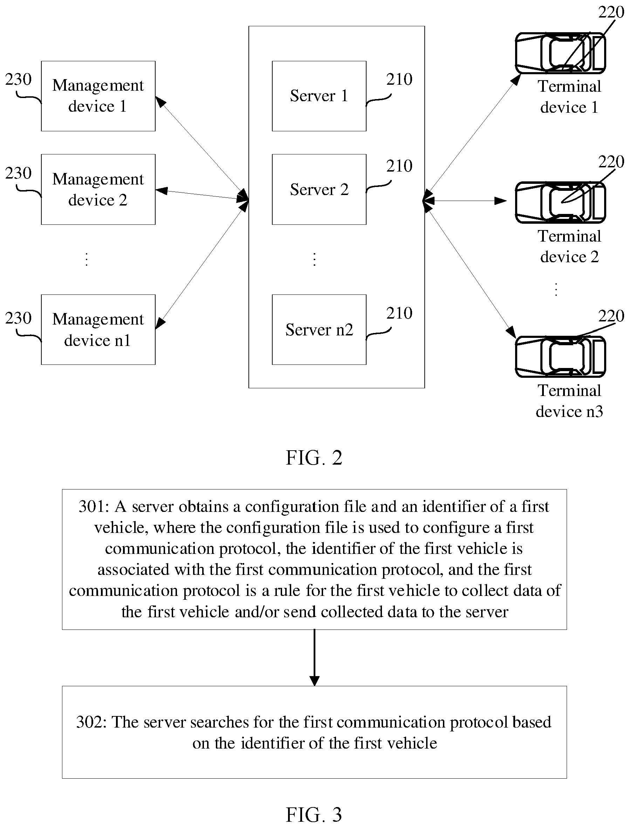

The CAN data is data that is of each component of a terminal device (for description of the terminal device, refer to the following related descriptions in FIG. 2) and that is collected by using a CAN bus in the terminal device. For ease of understanding, an example in which the terminal device is a vehicle is used for description. For the vehicle, CAN data collected by a CAN bus may include, for example, validity of a right rear tire indicator status, a fast leakage indicator status, validity of the fast leakage indicator status, a left front tire pressure value, validity of the left front tire pressure value, a left front tire temperature value, validity of the left front tire temperature value, a right front tire pressure value, validity of the right front tire pressure value, a right front tire temperature value, validity of the right front tire temperature value, a left rear tire pressure value, validity of the left rear tire pressure value, validity of a left rear tire temperature value, a right rear tire pressure value, validity of the right rear tire pressure value, a right rear tire temperature value, and validity of the right rear tire temperature value.

3. Data transfer object (data transfer object, DTO)

The data transfer object DTO is a data format used for data encapsulation and data transfer between layers.

4. Subcode (subcode)

In this application, the subcode is binary encoding of data, and a unique DTO field may be matched by using the binary encoding when a server parses the data.

5. Collection period

In this application, the collection period is a period in which a terminal device collects data of each component of the terminal device by using a CAN bus. For example, if the terminal device collects data every 1 millisecond, the collection period is 1 millisecond.
Data collection periods of different components may be different or may be the same. A value of the collection period is not limited in this application.

6. Report period

In this application, the report period is a period in which a terminal device sends data collected by using a CAN bus to a server (for descriptions of the server, refer to the following related descriptions in FIG. 2). For example, if the terminal device sends data to the server every 10 milliseconds, the report period is 10 milliseconds. A specific value of the collection period is not limited in this application.

7. Binary code stream of CAN data

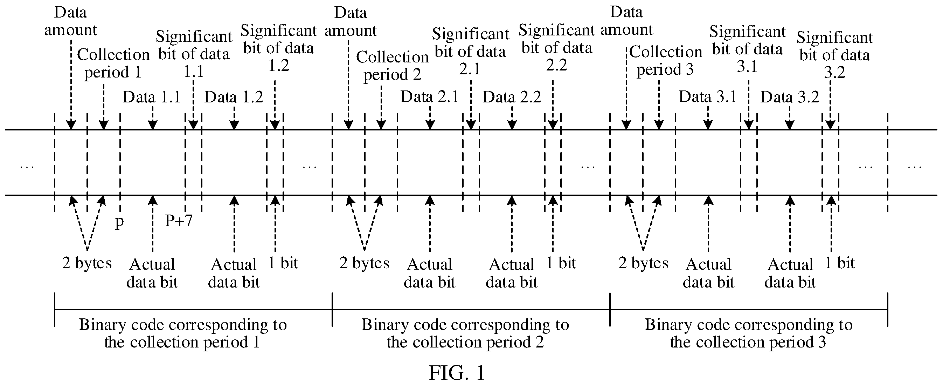

CAN data sent by a terminal device to a server is in a form of a binary code stream. In other words, the terminal device separately encodes collected plurality of pieces of CAN data to obtain binary data corresponding to each piece of CAN data, then splices the binary data together to obtain a binary code stream, and sends the binary code stream to the server. For ease of understanding the binary code stream of the CAN data, for example, refer to FIG. 1.
FIG. 1 shows an example of a schematic diagram of a binary code of a CAN data part in a binary code stream sent by a terminal device to a server. In FIG. 1, an example in which reported CAN data includes CAN data collected in three collection periods is used for description. A quantity of collection periods included in data reported each time is not limited in a specific embodiment of this application. It can be seen that the binary code corresponding to each collection period includes a data amount and information about the collection period, and each occupies a length of two bytes. The data amount refers to a quantity of pieces of data reported in a corresponding collection period. A collection period 1 is used as an example. There are a plurality of pieces of data collected in the collection period 1, and each piece of data is marked by using a data identifier such as 1.1 or 1.2. A length of a binary code stream occupied by each piece of data is determined according to a specification of a communication protocol, and this is not limited in this solution. In addition, in FIG. 1, it may be further seen that each piece of data corresponds to a 1-bit significant bit, which is used to indicate whether the data is valid. For example, if the significant bit is 1, it indicates that the data is invalid; and if the significant bit is 1, it indicates that the data is valid.

To better understand a data communication processing method provided in embodiments of this application, the following describes an example of a scenario to which the embodiments of this application are applicable.

FIG. 2 is an example diagram of a system architecture used in a data communication processing method according to this application. The system architecture may include one or more (for example, in FIG. 2, n2) servers 210, a plurality of (for example, in FIG. 2, n3) terminal devices 220, and a plurality of (for example, in FIG. 2, n1) management devices 230. The terminal device 220 and the management device 230 may interact with and communicate with the server 210. The plurality of servers 210 may form a server cluster, or form a system such as a data center. n1, n2, and n3 may be integers greater than 1.

The server 210 may be configured to obtain data of the terminal device 220 from the terminal device 220, to analyze a status of the terminal device 220. For example, the server 210 may be a physical server, a cloud server, or the like. A communication interface is deployed in the server 210, and is used for communication with the management device 230 and the terminal device 220. For example, an add (post) interface, a modify (put) interface, a query (get) interface, a delete (delete) interface, and the like are deployed in the server 210. The management device 230 may invoke the post interface to send a communication protocol and the like to the server 210. The management device 230 may invoke the put interface to modify a communication protocol and the like stored in the server 210. The management device 230 may invoke the get interface to query the server 210 about data and the like. The management device 230 may invoke the delete interface to delete data and the like stored in the server 210.

In addition, an application program or a software platform that is configured to process data sent by the management device 230 and process data sent by the terminal device 220 is further deployed in the server 210. For example, the application program or the software platform may be an Internet of Things management system: an ocean connect (ocean connect, OC) software platform.

Devices such as a sensor, a motor, and an instrument in the terminal device 220 may be connected by using a CAN bus. The terminal device 220 may collect status data of each component of the terminal device 220 by using the CAN bus. The data may be referred to as CAN data. The terminal device 220 may send the collected CAN data to the server 210, and then the server 210 may analyze a status of the terminal device 220 based on the CAN data. For example, the terminal device 220 may be a vehicle, a roadside unit, a ship, a robot, a numerical control machine tool device, or the like. Any device that collects data of the device by using a CAN bus and sends the data to the server 210 belongs to the terminal device described in this application.

The management device 230 may be a server configured to manage the terminal device 220; and an application program or software configured to manage the terminal device 220 is deployed on the management device 230. The management device 230 may be configured to manage various information of the terminal device 220, for example, an identifier of the terminal device 220, an online state, a health state, a user to whom the terminal device 220 belongs, and a CAN bus communication protocol used by the terminal device 220. In this application, the management device 230 may further send, to the server 210, a CAN bus communication protocol used by the terminal device 220, and the server 210 may store the protocol for subsequent parsing of CAN data sent by the terminal device 220. For example, it is assumed that the terminal device 220 is a vehicle, and the management device 230 may be a management device or the like in a manufacturing enterprise of the vehicle, or the management device 230 may be a third-party management device or the like.

In this application, the terminal device 220 may include a plurality of types of terminal devices or terminal devices manufactured by a plurality of manufacturers, and the management device 230 may also correspondingly include management devices of a plurality of manufacturers, or the like.

With continuous development of technologies, CAN bus communication protocols used by terminal devices 220 manufactured by different manufacturers are not necessarily the same. In other words, each manufacturer may have a respective CAN bus communication protocol launched by the manufacturer and the CAN bus communication protocol is used on a respective terminal device manufactured by the manufacturer. In this case, CAN data received by the server 210 from terminal devices 220 of different manufacturers may be collected and reported according to different CAN bus communication protocols, and the server 210 needs to parse the received different CAN data according to the different CAN bus communication protocols. In this application, the reported data is CAN data sent by the terminal device to the server.

Usually, parsing of received CAN data is implemented by deploying parsing code of the CAN data on the server 210. However, the code can parse data of only one CAN bus communication protocol. If data of a plurality of different CAN bus communication protocols needs to be parsed, a plurality of sets of code need to be deployed, causing large consumption of human and material resources, and occupying many storage resources and computing resources of the server 210. In addition, because the plurality of sets of parsing code need to be deployed, a long research and development time is needed. This greatly restricts service online efficiency. To resolve these problems, this application provides a data communication processing method, so that data reported by a terminal device based on various different CAN bus communication protocols can be parsed at low costs and flexibly.

Refer to FIG. 3. A data communication processing method provided in this application may be applied to the scenario shown in FIG. 2, and the method may include but is not limited to the following steps.

301: A server obtains a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the server.

For example, the server may be, for example, the server 210 shown in FIG. 2, and the first vehicle may be the terminal device 220 shown in FIG. 2.

A plurality of different communication protocols are configured in the server in a form of a configuration file. All these communication protocols are rules for a terminal device such as a vehicle to collect data of the terminal device and/or send collected data to the server. In addition, in the server, an identifier of each vehicle is associated with a communication protocol used by the vehicle, so that the communication protocol used by the vehicle can be found based on the identifier of the vehicle.

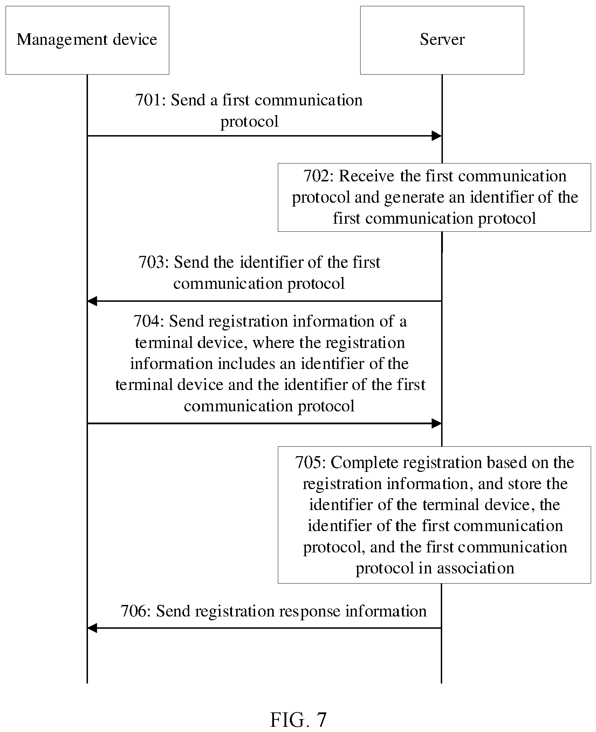

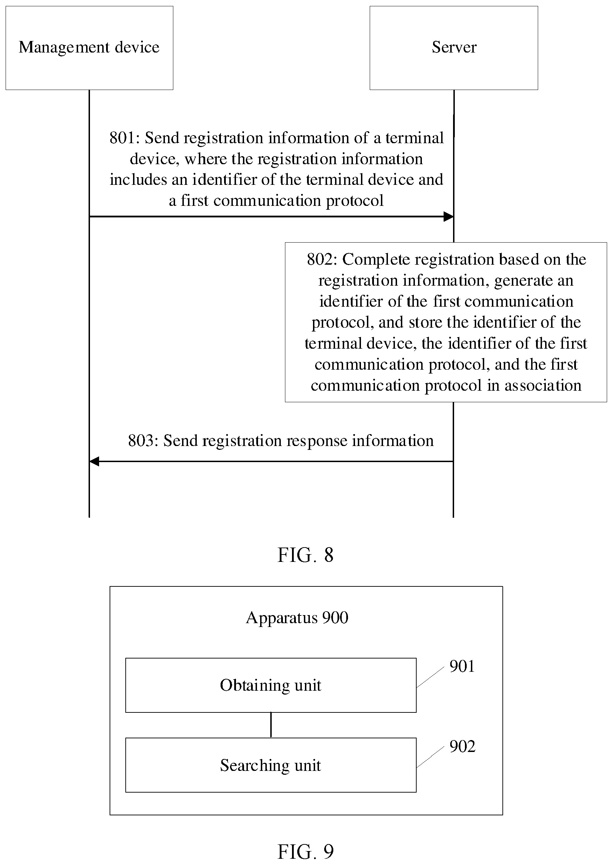

It should be noted that the configuration file corresponding to the communication protocol includes content of the communication protocol. For the server, the configuration file of the communication protocol is the communication protocol. Optionally, a communication protocol sent by the management device (for example, the management device 230 shown in FIG. 2) described in FIG. 7 and FIG. 8 to the server may be a configuration file of the communication protocol.

The first vehicle and the first communication protocol are used as an example. A communication protocol, namely, the first communication protocol, used by the first vehicle is pre-configured in the server. Optionally, the server may receive the configuration file of the first communication protocol from the management device, and then store the configuration file in a database. Alternatively, optionally, the server may obtain the configuration file of the first communication protocol by using an input device of the server, for example, a worker directly inputs content of the first communication protocol into the server to form the configuration file.

After obtaining the first communication protocol, the server may generate an identifier of the first communication protocol and send the identifier to the management device. The management device sends registration information of the first vehicle to the server, where the registration information includes the identifier of the first communication protocol and the identifier of the first vehicle. Then, the server associates the identifier of the first vehicle with the first communication protocol for subsequent query. For a specific implementation process, refer to the following descriptions corresponding to FIG. 7. Details are not described herein.

In a possible implementation, the configuration file of the first communication protocol that is obtained by the server is carried in the registration information of the first vehicle that is sent by the management device, and the registration information further includes an identifier of the first vehicle. In this case, after receiving the registration information, the server may associate the identifier of the first vehicle with the first communication protocol, to facilitate subsequent query. For a specific implementation process, refer to the following descriptions corresponding to FIG. 8. Details are not described herein.

After the server associates the identifier of the first vehicle with the first communication protocol, the first vehicle may establish a communication connection to the server, and send the identifier of the first vehicle to the server, to obtain a data format of the corresponding communication protocol.

302: The server searches for the first communication protocol based on the identifier of the first vehicle.

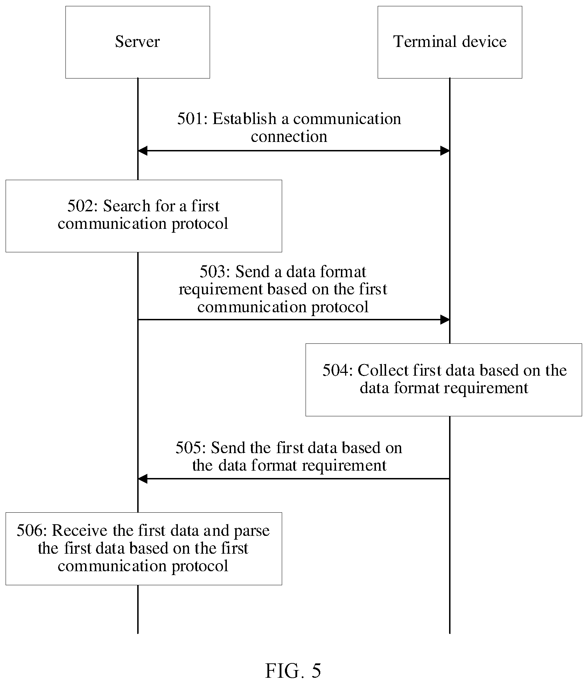

After establishing the communication connection to the first vehicle, and receiving the identifier of the first vehicle from the first vehicle, the server finds, based on the identifier of the first vehicle, the first communication protocol used by the first vehicle. Then, a corresponding data format requirement is generated based on the first communication protocol and delivered to the first vehicle, and the first vehicle collects and reports data to the server based on the data format requirement. After receiving the data collected and reported by the first vehicle, the server may find the first communication protocol used by the first vehicle, and complete parsing of the data based on the first communication protocol. For a specific implementation process, refer to the following descriptions corresponding to FIG. 5. Details are not described herein.

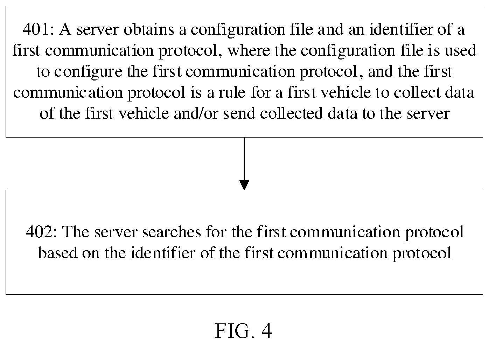

Refer to FIG. 4. This application provides another data communication processing method. The method may be applied to the scenario shown in FIG. 2. The method may include but is not limited to the following steps.

401: A server obtains a configuration file and an identifier of a first communication protocol, where the configuration file is used to configure the first communication protocol, and the first communication protocol is a rule for a first vehicle to collect data of the first vehicle and/or send collected data to the server.

For example, the server may be, for example, the server 210 shown in FIG. 2, and the first vehicle may be the terminal device 220 shown in FIG. 2.

In this embodiment of this application, the server may receive the configuration file of the first communication protocol from a management device (for example, the management device 230 shown in FIG. 2), and store the configuration file in a database. It should be noted that the configuration file corresponding to the communication protocol includes content of the communication protocol. For the server, the configuration file of the communication protocol is the communication protocol.

Optionally, after receiving the first communication protocol, the server may generate an identifier of the first communication protocol, associate the identifier with the first communication protocol, send the identifier to the management device, and then store the identifier of the first communication protocol in the first vehicle. For example, the identifier of the first communication protocol may be stored in the first vehicle when the first vehicle is manufactured, or the management device may send the first communication protocol to the first vehicle and store the first communication protocol.

Alternatively, optionally, the identifier of the first communication protocol does not need to be generated by the server, but is sent by the management device to the server. For example, when sending the first communication protocol to the server, the management device sends the identifier of the first communication protocol to the server. Then, the server associates the identifier of the first communication protocol with the first communication protocol and stores the identifier of the first communication protocol and the first communication protocol for subsequent query. In addition, the identifier of the first communication protocol is further stored in the first vehicle. For example, the identifier of the first communication protocol may be stored in the first vehicle when the first vehicle is manufactured, or the management device may send the first communication protocol to the first vehicle and store the first communication protocol.

After the server associates the identifier of the first communication protocol with the first communication protocol, the first vehicle may establish a communication connection to the server, and send the identifier of the first communication protocol stored in the first vehicle to the server, to obtain a data format of the corresponding communication protocol.

402: The server searches for the first communication protocol based on the identifier of the first communication protocol.

After receiving the identifier of the first communication protocol from the first vehicle, the server finds, based on the identifier of the first communication protocol, the first communication protocol used by the first vehicle. Then, a corresponding data format requirement is generated based on the first communication protocol and delivered to the first vehicle, and the first vehicle collects and reports data to the server based on the data format requirement. After receiving the data collected and reported by the first vehicle, the server may find the first communication protocol used by the first vehicle, and complete parsing of the data based on the first communication protocol. For a specific implementation process, refer to the following descriptions corresponding to FIG. 5. Details are not described herein.

Compared with the embodiment shown in FIG. 3, in the embodiment shown in FIG. 4, the server may not need to associate the first communication protocol with information about the vehicle, for example, the identifier of the vehicle. In this case, the server may not store the information about the vehicle, thereby saving storage resources of the server.

In a possible implementation, in the embodiments shown in FIG. 3 and FIG. 4, configuration files of different communication protocols in the server may be stored in the server in a form of a preset model. The preset model includes expression forms of data types in a plurality of different communication protocols. For example, for a specific form of the preset model, refer to the following Table 1 and Table 2.

**Table 1**

| Name | Mandatory or not | Type | Note |
|---|---|---|---|
| id | Y | string | Unique identifier of a communication protocol |
| report period | Y | integer | Data report period |
| data format | Y | list<data format> | Detailed description of each CAN data format |

Table 1 shows an example of a preset model that is provided in this application and that uniformly represents various different communication protocols in a server. It may be learned that the preset model includes a unique identifier of a communication protocol, and the identifier is the identifier of the communication protocol mentioned above. A type of the identifier of the communication protocol is needed to be a string (string) type.

The preset model further includes a period in which the terminal device that uses the communication protocol sends CAN data to the server, and the period is referred to as a report period (report period). A type of the report period needs to be an integer (integer) type.

The preset model further includes a specific description of a format of each piece of CAN data in the terminal device that uses the communication protocol. A format of each piece of CAN data may be described in a form of a list (list). For example, refer to Table 2. Table 2 is a list of formats of CAN data in the preset model provided in this application.

**Table 2**

| Name | Mandatory or not | Type | Note | Constraint |
|------|------------------|------|------|------------|
| Data identifier (data id) | Y | string | Identifier of CAN data | Identifiers of all reported CAN data are consecutive integers |
| Data type (type) | Y | Enumeration (enum) | Four types of data are included: validity (valid), status (status), value (value), and string (string) | A length of valid data is 1; a length of status data needs to be not greater than a maximum quantity of enumerations that can be represented by the data length; an enumeration field corresponding to an enumeration status can be found in a DTO attribute; and a maximum/minimum value of value data needs to be not greater than a specified maximum/minimum value |
| Maximum (maximum) value | N | Float (float) | Maximum value of value type data | When a type is the value type, the data needs to be provided |
| Minimum (minimum) value | N | float | Minimum value of value type data | When a type is the value type, the data needs to be provided |
| Accuracy (accuracy) | N | float | Accuracy of value type data | When a type is the value type, the data needs to be provided |
| Offset (offset) | N | float | Offset of value type data | When a type is the value type, the data needs to be provided |
| Status data type (status type) | N | list<string> | Description of status type data | When a type is the status type, the data needs to be provided |
| Subcode (subcode) | Y | string | For determining a DTO field corresponding to the data | Subcode of all reported data cannot be duplicate |
| Length of reported data (report length) | N | integer | Length of reported data | When a type is the valid type, the item needs to be 1 |
| Report the most significant bit (report MSB) | Y | integer | Report the most significant bit (the most significant bit, MSB) | If reported binary bits are arranged from left to right, the most significant bit of same data cannot be on the right of the least significant bit |
| Report the least significant bit (report LSB) | Y | integer | Report the least significant bit (the least significant bit, LSB) | If reported binary bits are arranged from left to right, the least significant bit of same data cannot be on the left of the most significant bit |
| Collection period (collect period) | Y | integer | Collection period | The collection period needs to be exactly divided by a report period |

(continued)

| Name | Mandatory or not | Type | Note | Constraint |
|------|------------------|------|------|------------|
| Length of collected data (collect length) | N | integer | Length of collected data | - |
| Collect the most significant bit (collect MSB) | Y | integer | Collect the most significant bit | If binary bits of collected data are arranged from left to right, the most significant bit of same collected data cannot be on the right of the least significant bit |
| Collect the least significant bit (collect LSB) | Y | integer | Collect the least significant bit | If binary bits of collected data are arranged from left to right, the least significant bit of same collected data cannot be on the right of the most significant bit |

In Table 2, an example of a format requirement of CAN data in the preset model may be shown. It should be noted that, in "Mandatory or not" in Table 2, Y indicates that the communication protocol needs to include corresponding content, and N indicates that the communication protocol may include or not include corresponding content. In addition to specifying a format of CAN data collected and reported by the terminal device, Table 2 further provides constraints corresponding to content. The constraints refer to conditions that need to be met. The following explains the content in Table 2 one by one.

Data identifier (data id): A data identifier indicates an identifier of reported CAN data, and a type of the identifier of the CAN data may be a string type. For example, it is assumed that the terminal device is a vehicle, and the CAN data reported by the vehicle includes validity of a right rear tire indicator status, a fast leakage indicator status, validity of the fast leakage indicator status, a left front tire pressure value, and validity of the left front tire pressure value. In this case, identifiers of the CAN data may be "1", "2", "3", "4", and "5" in sequence.

In addition, it can be seen from the constraint that identifiers of all reported CAN data are required to be consecutive integers. Optionally, in a specific embodiment, the identifiers of all the reported CAN data may be restricted to consecutive characters such as letters, or restricted to a combination (for example, the data identifier shown in FIG. 1) of regular characters, or the like. This is not limited in this application.

Data type (type): A data type refers to a data type of CAN data, including a validity (valid) data type, a status (status) data type, a value (value) data type, and a string (string) data type.

The valid data type is used to describe a status of a component of the terminal device or validity of data. For example, it may be agreed that a value 0 is used to represent invalid (invalid), and a value 1 is used to represent valid (valid). For example, it is assumed that the component of the terminal device is a right rear tire indicator. For a status of the right rear tire indicator, 1 may be used to indicate that the status of the indicator is valid, and 0 may be used to indicate that the status of the indicator is invalid. For a temperature value of a right rear tire, 1 may also be used to indicate that the temperature value is valid, and 0 indicates that the temperature value is invalid.

A data length of the valid data type needs to be 1 in the constraint. Optionally, in a specific embodiment, the data length for describing validity may also be restricted to another length, for example, 2 or 3. This is not limited in this application.

The status data type is used to describe a status of a component of the terminal device, and may be represented in an enumeration form. A length of the data that describes the component status may be 1. For example, a status of a door generally includes two states: a closed (closed) state and an open (open) state. In this case, 0 may be used to represent the closed state of the door, and 1 may be used to represent the open state of the door. For another example, for a status of a fast leakage indicator, there are two states: a not fast leakage (not fast leakage) state and a fast leakage (fast leakage) state. In this case, 0 may be used to indicate the not fast leakage state, and 1 may be used to indicate the fast leakage state.

In the constraint, a length of the status data type needs to be not greater than a maximum quantity of enumerations that can be represented by the data length. In addition, an enumeration field corresponding to an enumeration status can be found in a DTO attribute. The DTO attribute is an attribute of data in a DTO format that is obtained after the server parses CAN data reported by the terminal device. The requirement that an enumeration field corresponding to an enumeration status can be found in a DTO attribute may ensure that each parsed status has a corresponding DTO field.

For ease of understanding, for example, assuming that a data length of a status of a left rear door is 1, a maximum enumeration quantity is 2, and 0 may be used to represent a closed state of the left rear door, and 1 may be used to represent an open state of the left rear door. Therefore, representation values of the two states may be added to the communication protocol and the foregoing data format requirement obtained through conversion based on the communication protocol. In addition, an enumeration type of the left rear door (left rear door) in the DTO attribute needs to include two states: the closed state and the open state.

For another example, it is assumed that a data length of a tire temperature is 2, a maximum enumeration quantity is 4, and the tire temperature corresponds to three states in total, including: a normal (normal) state, a high (high) state, and a reserved (reserved) state. 0 may be used to represent the normal state, 1 may be used to represent the high state, and 2 or 3 may be used to represent the reserved state. Therefore, the two states may be added to the communication protocol and the foregoing data format requirement obtained through conversion based on the communication protocol in a decoding process. In addition, an enumerated type of the tire temperature in the DTO attribute needs to include three states: normal, high, and reserved. In this way, the server may parse, based on a rule that 0=normal, 1=high, and 2 or 3=reserved, the tire temperature reported by the terminal device.

The value data type is used to describe a specific value of a component of the terminal device in some aspects, for example, used to describe a specific value of a temperature and a pressure that are of the component and that are collected by using a sensor. In a process in which the server parses the CAN data reported by the terminal device, for data of the value data type, reported binary data needs to be first converted into decimal data, and then calculation is performed based on an accuracy and an offset specified in the communication protocol, to obtain a corresponding value. The value obtained through calculation needs to be not less than a specified minimum value and not greater than a specified maximum value. A calculation method is shown in Formula (1).

$$value = accuracy * data + offset \tag{1}$$

In Formula (1), accuracy represents an accuracy degree, offset represents an offset, data represents a decimal value obtained based on a binary code stream, and value represents final data obtained through calculation. It should be noted that the value needs to be within a range specified in the communication protocol.

In the constraint, a maximum value of the value data type needs to be not greater than a specified maximum value, and the minimum value of the value data type needs to be not less than a specified minimum value. To meet this constraint, the maximum value calculated based on the data length, accuracy, and offset needs to be not greater than the specified maximum value, and the calculated minimum value needs to be not less than the specified minimum value. To be specific, the following relationships of Formula (2) and Formula (3) need to be met:

$$minimum \geq offset \tag{2}$$

$$maximum \leq D * accuracy + offset \tag{3}$$

minimum represents a minimum value of data, and maximum represents a maximum value of data. It is assumed that a binary length of data is L, and D represents a maximum value of decimal data obtained through conversion from the binary data, that is, $D = 2^L - 1$. For example, assuming that the binary length of the data is 7, $D = 2^7 - 1 = 127$. Because the data of the value data type is obtained through calculation by using the foregoing Formula (1), it can be learned that a minimum value specified for the data of the value data type is a value obtained through calculation when data is 0, that is, offset; and a maximum value specified for the data of the value data type is a value obtained through calculation when data is D, that is, D*accuracy+offset.

It can be seen from Table 2 that, if the described CAN data is data of a value data type, the constraint needs the parameters such as the maximum (maximum) value, minimum (minimum) value, accuracy (accuracy), and offset (offset) to be clearly described in the communication protocol.

If the described CAN data is data of a status data type, the constraint needs the communication protocol to have a clear description that the CAN data is the data of the status data type.

For the subcode (subcode), the server needs to match a unique DTO field by using the subcode. Therefore, the constraint needs subcode of all CAN data reported by the terminal device to be not duplicate. In other words, each piece of CAN data has unique subcode.

The string data type may be used to describe data such as a manufacturer and a type of the terminal device

**EP 4 287 585 A1**

that is collected by the terminal device, or may be used to describe collected error code, error information, or the like, or may be used to transmit other text information or the like.

In Table 2, if the described CAN data is data of a valid data type, a length of the CAN data reported by the terminal device is 1.

It is assumed that binary bits of a binary code stream reported by the terminal device are arranged from left to right. In this case, the most significant bit of binary code of specific CAN data in the binary code stream cannot be on the right side of the least significant bit, and the least significant bit cannot be on the left side of the most significant bit. For ease of understanding, for example, refer to FIG. 1. Data 1.1 in FIG. 1 is used as an example for description. It is assumed that binary code of the data 1.1 is 10011010, and a quantity of bits is 8 bits, and the data 1.1 occupies 8 bits from the $p^{th}$ bit to the $(p+7)^{th}$ bit in the reported binary code stream. In this case, a position of the binary code of the data 1.1 in the reported binary code stream may be specified that the most significant bit of the data 1.1 is the $p^{th}$ bit, and the least significant bit is the $(p+7)^{th}$ bit. It cannot be specified that the most significant bit of data 1.1 is the $(p+7)^{th}$ bit, and the least significant bit is the $p^{th}$ bit.

In addition, the data length calculated based on the most significant bit and least significant bit needs to be the same as the length of the reported data.

A collection period of CAN data needs to be an integral division of a report period of the CAN data. In other words, the report period is an integer multiple of the collection period.

Optionally, data identifiers of data with a same collection period in Table 2 are consecutive. For example, if there are three pieces of data whose collection periods are 500 milliseconds, and there are two pieces of data whose collection periods are 200 milliseconds, identifiers of the three pieces of data whose collection periods are 500 milliseconds may be set to consecutive, for example, 1, 2, and 3. In addition, identifiers of the two pieces of data whose collection periods are 200 milliseconds may also be set to consecutive, for example, 4 and 5. If the identifiers of the data whose collection periods are 500 milliseconds are set to 1, 3, and 4, and the identifiers of the data whose collection periods are 200 milliseconds are set to 2 and 5, the rule is not met.

In the binary code stream reported by the terminal device, report intervals of all pieces of CAN data cannot overlap. For ease of understanding, FIG. 1 is still used as an example for description. The data 1.1 and the data 1.2 are used as an example. A report interval of the data 1.1 may be an interval occupied by binary code of the data 1.1 and a significant bit, and a report interval of the data 1.2 is an interval occupied by binary code of the data 1.2 and a significant bit. The two intervals cannot occupy a same bit. For example, if the report interval of the data 1.1 occupies the $p^{th}$ bit to the $(p+9)^{th}$ bit, it is rational that the report interval of the data 1.2 occupies the $(p+10)^{th}$ bit to the $(p+19)^{th}$ bit. However, if the report interval of the data 1.2 occupies the $(p+9)^{th}$ bit to the $(p+18)^{th}$ bit, it is not rational. Because both the two pieces of data occupy the $(p+9)^{th}$ bit, the two pieces of data cannot be correctly parsed.

In addition, a packet of a data format requirement delivered by the server to the terminal device is also transmitted in a form of a binary code stream, and the delivered data format also includes a collection requirement and a report requirement of a plurality of pieces of CAN data. Similarly, in the data format constraint of this application, binary bits occupied by data format requirements of all pieces of CAN data in the binary code stream of the delivered data format cannot overlap.

It is assumed that binary bits of a binary code stream that is delivered by the server to the terminal device and that is of a data format requirement are arranged from left to right. In this case, the most significant bit of binary code of a data format requirement of CAN data in the binary code stream cannot be on the right side of the least significant bit, and the least significant bit cannot be on the left side of the most significant bit. A data length obtained through calculation based on the most significant bit and the least significant bit needs to be consistent with a length of collected data.

The foregoing mainly describes, based on Table 1 and Table 2, an example of a preset model that is provided in this application and that uniformly represents various different communication protocols in the server. It should be noted that the preset model is merely an example, and the preset model in a specific embodiment is not limited to the content described above.

To better understand the data communication processing method provided in this application, the following further describes a flowchart of interaction between devices.

Refer to FIG. 5. FIG. 5 shows an interaction procedure in which a terminal device obtains a data format requirement of a corresponding communication protocol from a server and reports data. The procedure may include but is not limited to the following steps.

501: The terminal device interacts with the server to establish a communication connection.

In a specific embodiment, the terminal device may be the terminal device 220 shown in FIG. 2, and the server may be the server 210 shown in FIG. 2.

The terminal device may send a connection request to the server, to request the server to establish a communication connection to the terminal device. The connection request may include an identifier of the terminal device. For example, assuming that the terminal device is a vehicle, an identifier of the vehicle may include a factory delivery number of the vehicle, a vehicle identification number (vehicle identification number, VIN), a license plate number of the vehicle, or the like.

After receiving the connection request, the server may return a connection establishment response message to the terminal device, to complete establishment of the communication connection between the terminal device and the server.

502: The server searches for a first communication protocol.

After the terminal device establishes the communication connection to the server, because in this application, different terminal devices may collect/report data of the terminal devices to the server based on different communication protocols, to quickly and flexibly parse data reported based on the different communication protocols, the server needs to deliver, to the terminal device, a data format requirement for the data collected/reported by the terminal device, to specify a data format of the data collected/reported by the terminal device. The data format requirement is obtained through conversion based on a communication protocol used by the terminal device (which is described in detail in step 303 below, and is not described in detail herein). Therefore, the server needs to first find the communication protocol correspondingly used by the terminal device.

Specifically, the first communication protocol is a CAN bus communication protocol used by the terminal device. In a specific embodiment, a plurality of CAN bus communication protocols are stored in the server, and these CAN bus communication protocols have respective protocol identifiers. The identifiers may identify different communication protocols in the server. In other words, a unique corresponding CAN bus communication protocol may be found based on a protocol identifier.

In a possible implementation, a specific implementation in which the server searches for the first communication protocol may be as follows: The server associates the identifier of the terminal device with the identifier of the CAN bus communication protocol used by the terminal device. In this case, the server may find, based on the identifier of the terminal device, the identifier of the communication protocol used by the terminal device, and further find the first communication protocol based on the identifier of the protocol. Alternatively, the server directly associates the identifier of the terminal device with the CAN bus communication protocol used by the terminal device. In this case, the server may directly find the first communication protocol based on the identifier of the terminal device. The identifier of the terminal device stored in the server may be sent by a management device to the server when the management device registers information about the terminal device with the server (for details, refer to the following descriptions of the embodiments shown in FIG. 7 and FIG. 8, and details are not described herein). In addition, in a process in which the terminal device interacts with the server to establish the communication connection, the server may obtain the identifier of the terminal device, to find the first communication protocol.

In another possible implementation, a specific implementation of searching for the first communication protocol by the server may be as follows: The connection request includes the identifier of the CAN bus communication protocol used by the terminal device. Alternatively, after the server establishes the connection to the terminal device, the terminal device further sends the identifier of the CAN bus communication protocol used by the terminal device to the server. In this way, the server may find the first communication protocol based on the identifier that is of the CAN bus communication protocol used by the terminal device and that is received from the terminal device.

503: The server sends the data format requirement to the terminal device based on the first communication protocol.

Specifically, the data format requirement is used to specify a format of data collected by the terminal device and/or data sent to the server.

In a specific embodiment, the terminal device collects data through the CAN bus based on the CAN bus communication protocol used by the terminal device. After the data is collected, the collected CAN data needs to be converted into a binary code stream and sent to the server. The CAN data is converted into a binary code stream also based on the CAN bus communication protocol used by the terminal device. In other words, a data format of the CAN data collected by the terminal device through the CAN bus and a format of the binary code stream sent by the terminal device to the server are both determined according to a stipulation in the CAN bus communication protocol used by the terminal device.

Based on the foregoing descriptions, the server subsequently needs to parse the binary code stream of the CAN data sent by the terminal device. Therefore, to facilitate parsing by the server, the server may convert, according to a preset rule, the CAN bus communication protocol used by the terminal device into the data format requirement. Then, the server sends the data format requirement obtained through conversion to the terminal device, so that the terminal device collects data and sends data according to the data format requirement.

It should be noted that the preset rule is applicable to all CAN bus communication protocols stored in the server, including the first communication protocol. In other words, the server may convert, according to the preset rule, all the CAN bus communication protocols into data format requirements corresponding to these CAN bus communication protocols.

For ease of understanding the foregoing preset rule, refer to Table 1 and Table 2. The foregoing preset rule needs a report period (report period) to be clearly specified in the communication protocol. A type of the report period needs to be an integer (integer) type. The foregoing preset rule further needs the communication protocol to clearly describe a specific description of a format of each piece of CAN data in a terminal device that uses the communication protocol. For the description of the format of each piece of CAN data, refer to Table 2. It can be learned from Table 2 that the preset rule may specify a format and a constraint of collecting and reporting CAN data by the terminal device. For descriptions of the format and the constraint, refer to the specific descriptions of Table 2. Details are not described herein again.

The foregoing mainly describes, based on Table 1 and Table 2, an example of the preset rule for converting the communication protocol into the data format requirement by the server. It should be noted that the preset rule is merely an example, and the preset rule in a specific embodiment is not limited to the content described above.

The server converts, according to the foregoing preset rule, the communication protocol, namely, the first communication protocol, used by the terminal device into the data format requirement, and then sends the data format requirement to the terminal device.

504: The terminal device collects first data based on the data format requirement.

After receiving the data format requirement sent by the server, the terminal device obtains corresponding content through parsing, and then collects data of each component in the terminal device through the CAN bus based on a corresponding data format.

505: The terminal device sends the first data to the server based on the data format requirement.

After collecting the CAN data, the terminal device generates a binary code stream of the CAN data based on a report format requirement of each piece of CAN data in the data format requirement. The generated binary code stream of the CAN data may be referred to as the first data. Then, the terminal device sends the first data to the server.

506: The server receives the first data and parses the first data based on the first communication protocol.

After receiving the first data from the terminal device, the server may first find the first communication protocol corresponding to the terminal device, and then parse, based on the first communication protocol, the first data to obtain actually reported CAN data of the terminal device. The CAN data may indicate a status of a corresponding component in the terminal device, and the like. Then, the server may analyze a status of the terminal device based on the CAN data obtained through parsing, and save the status of the terminal device into a database in real time.

Specifically, because the first communication protocol already specifies a position of each piece of CAN data reported by the terminal device in the binary code stream and a length of the data, after receiving the binary code stream, namely, the first data, reported by the terminal device, the server may parse binary data of each piece of CAN data based on the first communication protocol, and then calculate an actual CAN value according to the foregoing Formula (1), where each CAN value corresponds to a type of status information, so as to obtain the status of the component corresponding to the terminal device, and the like.

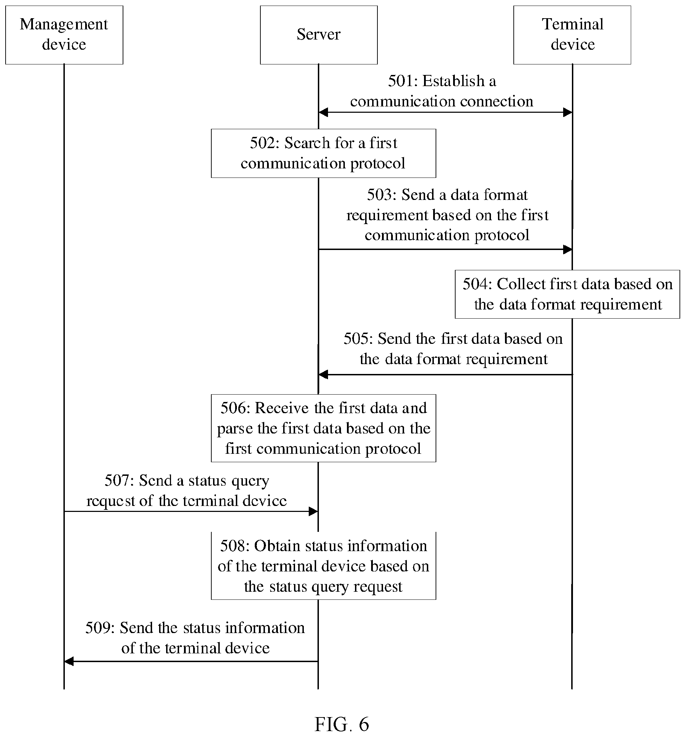

Optionally, the management device (for example, the management device 230 shown in FIG. 1) may interact with the server, to obtain the status information of the terminal device stored in the server. For example, refer to FIG. 6. In FIG. 6, after step 506 in which the server receives the first data and parses the first data based on the first communication protocol, the method may further include but is not limited to the following steps.

507: The management device sends a status query request of the terminal device to the server.

The status query request may include the identifier of the terminal device.

508: The server obtains the status information of the terminal device based on the status query request.

After receiving the status query request, the server obtains the identifier of the terminal device through parsing, and finds latest status information of the terminal device in the database based on the identifier.

509: The server sends the status information of the terminal device to the management device.

After obtaining the latest status information of the terminal device, the server encapsulates the latest status information into a packet and sends the packet to the management device. The management device may learn of a status of the terminal device based on the status information of the terminal device, to make corresponding determining and control. For example, the management device may determine whether the terminal device is abnormal, and if the terminal device is abnormal, the management device needs to remind a user to reduce accidental damage.

In a possible implementation, after receiving the CAN data reported by the terminal device, the server may not analyze the data, and may directly store the received data in the database. Then, the management device may interact with the server to obtain the CAN data of the terminal device, and then the management device analyzes the status of the corresponding terminal device based on the CAN data.

In a possible implementation, step 502 in which the server associates the identifier of the terminal device with the identifier of the CAN bus communication protocol used by the terminal device, or the server directly associates the identifier of the terminal device with the CAN bus communication protocol used by the terminal device may be implemented in an implementation shown in FIG. 7. As shown in FIG. 7, the method may include but is not limited to the following steps.

701: The management device sends the first communication protocol to the server.

In a specific embodiment, the management device may configure a communication protocol used by the terminal device. The following still uses an example in which the communication protocol used by the terminal device is the first communication protocol for description.

The management device may send the first communication protocol used by the terminal device to the server, to store the first communication protocol in the server.

For example, the management device may invoke a post interface of the server to send the first communication protocol to the server.

702: The server receives the first communication protocol and generates an identifier of the first communication protocol.

After the server receives the first communication protocol, because the server needs to manage a plurality of different communication protocols, for ease of management, a unique identifier may be configured for each communication protocol. Therefore, the server may generate a unique identifier for the first communication protocol.

703: The server sends the identifier of the first communication protocol to the management device.

After receiving the identifier of the first communication protocol sent by the server, the management device may associate the identifier of the first communication protocol with the information about the terminal device that uses the first communication protocol.

704: The management device sends registration information of the terminal device to the server, where the registration information includes the identifier of the terminal device and the identifier of the first communication protocol.

Before the terminal device establishes the communication connection to the server, the management device needs to register the information about the terminal device with the server. Therefore, the management device may send the registration information of the terminal device to the server. The registration information may include information such as the identifier of the terminal device, information about a user to which the terminal device belongs, a related status of the terminal device, and the identifier of the communication protocol, namely, the first communication protocol, used by the terminal device. It should be noted that the registration information of the terminal device may include any information related to the terminal device. This is not limited in this application.

705: The server completes registration based on the registration information, and associates the identifier of the terminal device, the identifier of the first communication protocol, and the first communication protocol.

After receiving the registration information, the server completes a registration operation of the terminal device based on the registration information. The registration operation may be, for example, storing the registration information in the database. This is not limited in this application. In addition, the server further associates the identifier of the terminal device and the identifier of the first communication protocol that are in the registration information with the first communication protocol that is stored in the server, to facilitate subsequent search.

Optionally, the server may alternatively find the first communication protocol based on the identifier of the first communication protocol, and associate only the identifier of the first communication protocol with the first communication protocol.

706: The server sends registration response information to the management device.

After completing registration, the server sends the registration completion response information to the management device, to notify the management device that the registration is completed.

In a possible implementation, step 502 in which the server associates the identifier of the terminal device with the identifier of the CAN bus communication protocol used by the terminal device, or the server directly associates the identifier of the terminal device with the CAN bus communication protocol used by the terminal device may alternatively be implemented in an implementation shown in FIG. 8. As shown in FIG. 8, the method may include but is not limited to the following steps.

801: The management device sends registration information of the terminal device to the server, where the registration information includes the identifier of the terminal device and the first communication protocol.

802: Complete registration based on the registration information, generate an identifier of the first communication protocol, and associate the identifier of the terminal device, the identifier of the first communication protocol, and the first communication protocol.

803: Send registration response information.

In this embodiment of this application, compared with the embodiment shown in FIG. 7, a main difference is that the management device does not separately send the first communication protocol to the server, but adds the first communication protocol to the registration information, and sends the registration information and the first communication protocol to the management device together, so that some interaction steps can be reduced, thereby saving bandwidth resources and computing resources of the two devices. In addition to the difference, for specific implementations of other steps shown in FIG. 8, refer to corresponding descriptions of the steps shown in FIG. 7. Details are not described herein again.

In a possible implementation, in the embodiments shown in FIG. 7 and FIG. 8, before generating the identifier of the first communication protocol, the server may first check whether the first communication protocol meets a preset requirement. Specifically, the server may check, according to a constraint (for example, the constraint shown in Table 2) in the foregoing preset rule, whether the first communication protocol meets the preset requirement. The server generates the identifier of the first communication protocol only when the first communication protocol meets the preset requirement. If the first communication protocol does not meet the preset requirement, the server may send, to the management device, a message indicating that the first communication protocol is not qualified, for example, directly return an error message.

In a possible implementation, the connection request in step 502 includes the identifier of the CAN bus communication protocol used by the terminal device, or after the server establishes the connection to the terminal device, the terminal device further sends the identifier of the CAN bus communication protocol used by the terminal device to the server. This may be implemented in the following two possible implementations:

In a first possible implementation, the management device may obtain the identifier of the first communication protocol according to the implementation shown in FIG. 7 or FIG. 8 and the possible implementation thereof, and then the management device may send the identifier of the first communication protocol to the terminal device, and the terminal device stores the identifier of the first communication protocol. Alternatively, because the management device is a management device of a manufacturer, in a manufacturing process of the terminal device, the identifier of the first communication protocol is stored in the management device, and the identifier of the first communication protocol is from an identifier received by the management device from the server. Therefore, when the terminal device sends the connection request to the server, the terminal device may add the identifier of the first communication protocol to the connection request; or after the server establishes the connection to the terminal device, the terminal device may further send the identifier of the first communication protocol to the server. Optionally, in this implementation, the server may not need to store a mapping relationship between the identifier of the terminal device and the identifier of the first communication protocol, or may not need to store a mapping relationship between the identifier of the terminal device and the first communication protocol.

In a second possible implementation, in a specific embodiment, the management device sends the first communication protocol to the server. The first communication protocol may be separately sent by the management device to the server (for example, as shown in the implementation shown in FIG. 7), or the first communication protocol may be sent by the management device to the server by adding the first communication protocol to the registration information of the terminal device (for example, as shown in the implementation shown in FIG. 8). In this implementation, when sending the first communication protocol to the server, the management device may further send the identifier of the first communication protocol to the server, and then the server associates the first communication protocol with the received protocol identifier for subsequent query. In this implementation, the unique identifier of the communication protocol is provided by the management device, but not generated by the server. In this case, the management device may send the identifier of the first communication protocol to the terminal device in advance, or store the protocol identifier when the terminal device is manufactured. Therefore, when the terminal device sends the connection request to the server, the terminal device may add the identifier of the first communication protocol to the connection request; or after the server establishes the connection to the terminal device, the terminal device may further send the identifier of the first communication protocol to the server.

It should be noted that the identifier of the first communication protocol sent by the management device to the server needs to meet a condition that the identifier is a unique protocol identifier in the server; otherwise, the server may still generate a new unique identifier for the first communication protocol.

In a possible implementation, before receiving the first communication protocol and the protocol identifier of the first communication protocol from the management device and associating the first communication protocol with the protocol identifier of the first communication protocol, the server may first check whether the first communication protocol meets a preset requirement. Specifically, the server may check, according to a constraint (for example, the constraint shown in Table 2) in the foregoing preset rule, whether the first communication protocol meets the preset requirement. The server associates the first communication protocol and the protocol identifier of the first communication protocol only when the first communication protocol meets the preset requirement. If the first communication protocol does not meet the preset requirement, the server may send, to the management device, a message indicating that the first communication protocol is not qualified, for example, directly return an error message.

In conclusion, in this application, a plurality of different communication protocols may be configured in the server, and a communication protocol used by the vehicle is associated with the identifier of the corresponding vehicle or the identifier of the communication protocol, so that the server can determine, based on the identifier of the vehicle or the identifier of the communication protocol, the communication protocol used by the vehicle, so as to correctly parse, based on the communication protocol used by the vehicle, data reported by the vehicle. Compared with an existing solution, in this application, complex parsing code does not need to be deployed for a specific communication protocol. This greatly saves human and material resources, saves storage resources and computer resources of a server, and can improve service rollout efficiency. In addition, a data parsing service provided by the server in this application can well adapt to various different vehicle manufacturers, and has good reusability. In addition, because different parsing code does not need to be deployed based on different protocols, frequent upgrade and update are not needed, and maintainability is better.

The foregoing mainly describes the data communication processing method provided in embodiments of this application. It may be understood that, to implement the foregoing functions, each device includes corresponding hardware structures and/or software modules for performing the corresponding functions. In combination with examples described in embodiments disclosed in this specification, units and steps may be implemented by hardware or a combination of hardware and computer software in this application. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the device may be divided into function modules based on the foregoing method examples. For example, each function module may be obtained through division based on each corresponding function, or two or more functions may be integrated into one module. The integrated module may be implemented in a form of hardware, or may be implemented in a form of a software function module. It should be noted that, in embodiments of this application, division into modules is an example, and is merely a logical function division. In an actual implementation, another division may be used.

When each function module is obtained through division based on each corresponding function, FIG. 9 shows a possible schematic diagram of a logical structure of an apparatus. The apparatus may be the foregoing server, or may be a chip in the server, or may be a processing system in the server, or the like. The apparatus 900 includes an obtaining unit 901 and a searching unit 902.

The obtaining unit 901 is configured to obtain a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the apparatus 900. The obtaining unit 901 may perform the operation described in step 301 shown in FIG. 3.

The searching unit 902 is configured to search for the first communication protocol based on the identifier of the first vehicle. The searching unit 902 may perform the operation in step 302 shown in FIG. 3.

In a possible implementation, the configuration file is stored in the apparatus 900 in a form of a preset model, and the preset model includes expression forms of data types in a plurality of different communication protocols.

In a possible implementation, the apparatus 900 further includes a processing unit, configured to determine that the configuration file meets a preset rule, where the preset rule is used to determine rationality of content of the configuration file.

In a possible implementation, the processing unit is specifically configured to: determine that a maximum value of first data in the configuration file is not greater than a specified maximum value, and determine that a minimum value of the first data is not less than a specified minimum value.

In a possible implementation, the obtaining unit 901 is specifically configured to receive registration information of the first vehicle, where the registration information includes the configuration file.

Optionally, the apparatus 900 may further include a receiving unit and a storage unit. The storage unit is configured to store data or computer instructions. The receiving unit is configured to receive a message or data.

In an example, the receiving unit may be a transceiver or an interface, the storage unit may be a memory, and the processing unit may be a processor.

For specific operations and beneficial effects of the units in the apparatus 900 shown in FIG. 9, refer to corresponding descriptions in the foregoing method embodiments. Details are not described herein again.

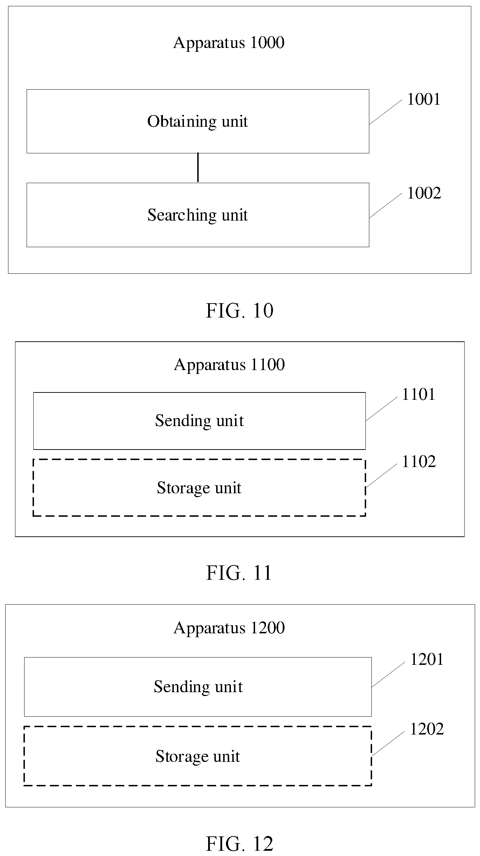

When each function module is obtained through division based on each corresponding function, FIG. 10 shows a possible schematic diagram of a logical structure of an apparatus. The apparatus may be the foregoing server, or may be a chip in the server, or may be a processing system in the server, or the like. The apparatus 1000 includes an obtaining unit 1001 and a searching unit 1002.

The obtaining unit 1001 is configured to obtain a configuration file and an identifier of a first communication protocol, where the configuration file is used to configure the first communication protocol, and the first communication protocol is a rule for a first vehicle to collect data of the first vehicle and/or send collected data to the apparatus 1000. The obtaining unit 1001 may perform the operation described in step 401 shown in FIG. 4.

The searching unit 1002 is configured to search for the first communication protocol based on the identifier of the first communication protocol. The searching unit 1002 may perform the operation in step 402 shown in FIG. 4.

In a possible implementation, the obtaining unit 1001 is specifically configured to receive the identifier of the first communication protocol from the first vehicle.

In a possible implementation, the configuration file is stored in the apparatus 1000 in a form of a preset model, and the preset model includes expression forms of data types in a plurality of different communication protocols.

In a possible implementation, the apparatus 1000 further includes a processing unit, configured to determine that the configuration file meets a preset rule, where the preset rule is used to determine rationality of content of the configuration file.

Optionally, the apparatus 1000 may further include a receiving unit and a storage unit. The storage unit is configured to store data or computer instructions. The receiving unit is configured to receive a message or data.

In an example, the receiving unit may be a transceiver or an interface, the storage unit may be a memory, and the processing unit may be a processor.

For specific operations and beneficial effects of the units in the apparatus 1000 shown in FIG. 10, refer to corresponding descriptions in the foregoing method embodiments. Details are not described herein again.

When each function module is obtained through division based on each corresponding function, FIG. 11 shows a possible schematic diagram of a logical structure of an apparatus. The apparatus may be the foregoing terminal device (for example, the first vehicle), or may be a chip in the terminal device, or may be a processing system in the terminal device. The apparatus 1100 includes a sending unit 1101.

The sending unit 1101 is configured to send an identifier of the vehicle to a server, where the identifier is used to search for a first communication protocol, and the first communication protocol is a rule for the vehicle to collect data of the vehicle and/or send collected data to the server.

Optionally, the server may further include a storage unit 1102, and the storage unit 1102 is configured to store data or computer instructions.

In an example, the sending unit 1101 may be a transceiver or an interface, and the storage unit 1102 may be a memory.

For specific operations and beneficial effects of the units in the apparatus 1100 shown in FIG. 11, refer to corresponding descriptions in the foregoing method embodiments. Details are not described herein again.

When each function module is obtained through division based on each corresponding function, FIG. 12 shows a possible schematic diagram of a logical structure of an apparatus. The apparatus may be the foregoing terminal device (for example, the first vehicle), or may be a chip in the terminal device, or may be a processing system in the terminal device. The apparatus 1200 includes a sending unit 1201.

The sending unit 1201 is configured to send an identifier of a first communication protocol to a server, where the identifier is used to search for the first communication protocol, and the first communication protocol is a rule for the vehicle to collect data of the vehicle and/or send collected data to the server.

Optionally, the server may further include a storage unit 1202, and the storage unit 1202 is configured to store data or computer instructions.

In an example, the sending unit 1201 may be a transceiver or an interface, and the storage unit 1202 may be a memory.

For specific operations and beneficial effects of the units in the apparatus 1200 shown in FIG. 12, refer to corresponding descriptions in the foregoing method embodiments. Details are not described herein again.

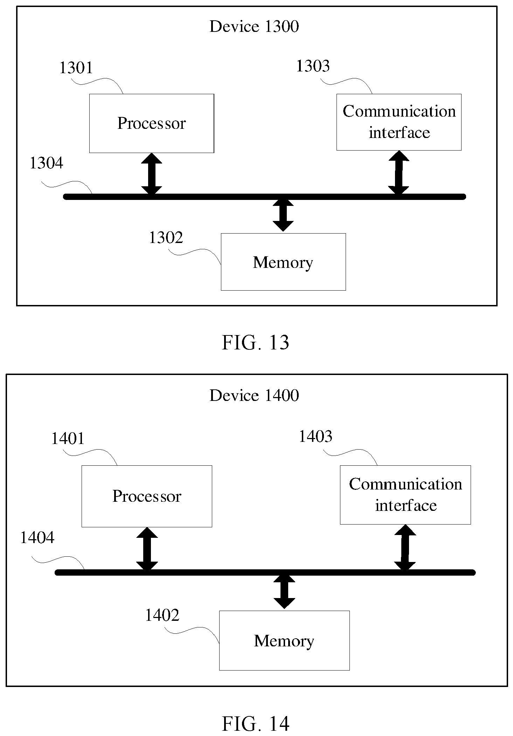

FIG. 13 is a schematic diagram of a possible hardware structure of a device according to this application. The device may be the server in the method in the foregoing embodiments. The device 1300 includes a processor 1301, a memory 1302, and a communication interface 1303. The processor 1301, the communication interface 1303, and the memory 1302 may be connected to each other, or may be connected to each other through a bus 1304.

For example, the memory 1302 is configured to store a computer program and data of the device 1300. The memory 1302 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), and the like.

When the embodiment shown in FIG. 9 is implemented, software or program code needed for performing functions of all or some units in FIG. 9 is stored in the memory 1302.

When the embodiment in FIG. 9 is implemented, if software or program code needed for functions of some units is stored in the memory 1302, in addition to invoking the program code in the memory 1302 to implement some functions, the processor 1301 may further cooperate with another component (for example, the communication interface 1303) to complete another function (for example, a function of receiving or sending data) described in the embodiment in FIG. 9.

There may be a plurality of communication interfaces 1303, and the communication interfaces 1303 are configured to support the device 1300 in performing communication, for example, receiving or sending data or a signal.

For example, the processor 1301 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination for implementing a computing function, for example, a combination of one or more microprocessors, or a combination of a digital signal processor and a microprocessor. The processor 1301 may be configured to read a program stored in the memory 1302, to perform the following operations:

obtaining a configuration file and an identifier of a first vehicle, and searching for a first communication protocol based on the identifier of the first vehicle, where the configuration file is used to configure the first communication protocol, the identifier of the first vehicle is associated with the first communication protocol, and the first communication protocol is a rule for the first vehicle to collect data of the first vehicle and/or send collected data to the device 1300.

In a possible implementation, the configuration file is stored in the device 1300 in a form of a preset model, and the preset model includes expression forms of data types in a plurality of different communication protocols. The data types include a validity data type, a status data type, a value data type, and a string data type.

In a possible implementation, the processor 1301 further performs the following operation: determining that the configuration file meets a preset rule, where the preset rule is used to determine rationality of content of the configuration file.

In a possible implementation, the determining that the configuration file meets a preset rule includes: determining that a maximum value of first data in the configuration file is not greater than a specified maximum value, and determining that a minimum value of the first data is not less than a specified minimum value. The first data may be data of a value data type, and the value data type may be, for example, a value type.

In a possible implementation, the obtaining a configuration file includes: receiving registration information of the first vehicle through the communication interface 1303, where the registration information includes the configuration file.

For specific operations and beneficial effects of the units in the device 1300 shown in FIG. 13, refer to corresponding descriptions in the foregoing method embodiments. Details are not described herein again.

FIG. 14 is a schematic diagram of a possible hardware structure of a device according to this application. The device may be the server in the method in the foregoing embodiments. The device 1400 includes a processor 1401, a memory 1402, and a communication interface 1403. The processor 1401, the communication interface 1403, and the memory 1402 may be connected to each other, or may be connected to each other through a bus 1404.

For example, the memory 1402 is configured to store a computer program and data of the device 1400. The memory 1402 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), and the like.

When the embodiment shown in FIG. 10 is implemented, software or program code needed for performing functions of all or some units in FIG. 10 is stored in the memory 1402.

When the embodiment in FIG. 10 is implemented, if software or program code needed for functions of some units is stored in the memory 1402, in addition to invoking the program code in the memory 1402 to implement some functions, the processor 1401 may further cooperate with another component (for example, the communication interface 1403) to complete another function (for example, a function of receiving or sending data) described in the embodiment in FIG. 10.

There may be a plurality of communication interfaces 1403, and the communication interfaces 1403 are configured to support the device 1400 in performing communication, for example, receiving or sending data or a signal.

For example, the processor 1401 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination for implementing a computing function, for example, a combination of one or more microprocessors, or a combination of a digital signal processor and a microprocessor. The processor 1401 may be configured to read a program stored in the memory 1402, to perform the following operations:

obtaining a configuration file and an identifier of a first communication protocol, and searching for the first communication protocol based on the identifier of the first communication protocol, where the configuration file is used to configure the first communication protocol, and the first communication protocol is a rule for a first vehicle to collect data of the first vehicle and/or send collected data to the device 1400.

In a possible implementation, the obtaining an identifier of a first communication protocol includes: receiving the identifier of the first communication protocol from the first vehicle through the communication interface 1403.

In a possible implementation, the configuration file is stored in the device 1400 in a form of a preset model, and the preset model includes expression forms of data types in a plurality of different communication protocols.

In a possible implementation, the processor 1401 further performs the following operation: determining that the configuration file meets a preset rule, where the preset rule is used to determine rationality of content of the configuration file.

For specific operations and beneficial effects of the units in the device 1400 shown in FIG. 14, refer to corresponding descriptions in the foregoing method embodiments. Details are not described herein again.

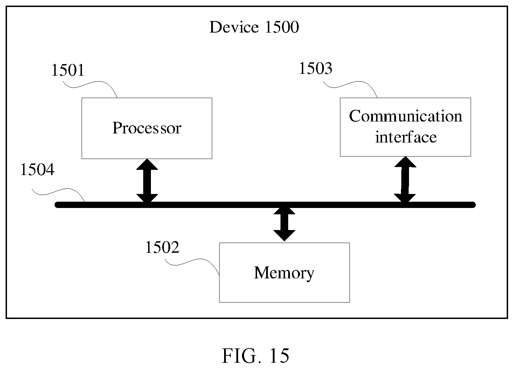

FIG. 15 is a schematic diagram of a possible hardware structure of a device according to this application. The device may be the terminal device (for example, the first vehicle) in the method in the foregoing embodiment. The device 1500 includes a processor 1501, a memory 1502, and a communication interface 1503. The processor 1501, the communication interface 1503, and the memory 1502 may be connected to each other, or may be connected to each other through a bus 1504.

For example, the memory 1502 is configured to store a computer program and data of the device 1500. The memory 1502 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), and the like.

When the embodiment shown in FIG. 11 or FIG. 12 is implemented, software or program code needed for performing functions of all or some units in FIG. 11 or FIG. 12 is stored in the memory 1502.

When the embodiment in FIG. 11 or FIG. 12 is implemented, if software or program code needed for functions of some units is stored in the memory 1502, in addition to invoking the program code in the memory 1502 to implement some functions, the processor 1501 may further cooperate with another component (for example, the communication interface 1503) to complete another function (for example, a function of receiving or sending data) described in the embodiment in FIG. 11 or FIG. 12.

There may be a plurality of communication interfaces 1503, and the communication interfaces 1503 are configured to support the device 1500 in performing communication, for example, receiving or sending data or a signal.

For example, the processor 1501 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination for implementing a computing function, for example, a combination of one or more microprocessors, or a combination of a digital signal processor and a microprocessor. The processor 1501 may be configured to read a program stored in the memory 1502, to perform the following operations:

sending an identifier of the first vehicle to a server, where the identifier is used to search for a first communication protocol, and the first communication protocol is a rule for the first vehicle to collect data of the first vehicle and/or send collected data to the server.

Alternatively, the processor 1501 may be configured to read a program stored in the memory 1502, to perform the following operations:

sending an identifier of a first communication protocol to a server, where the identifier is used to search for the first communication protocol, and the first communication protocol is a rule for the first vehicle to collect data of the first vehicle and/or send collected data to the server.

For specific operations and beneficial effects of the units in the device 1500 shown in FIG. 15, refer to corresponding descriptions in the foregoing method embodiments. Details are not described herein again.

An embodiment of this application further provides a computer-readable storage medium. The computer-readable storage medium stores a computer program, and the computer program is executed by a processor to implement an operation performed by the server in any one of the foregoing embodiments and the possible embodiments of the foregoing embodiments.

An embodiment of this application further provides a computer-readable storage medium. The computer-readable storage medium stores a computer program, and the computer program is executed by a processor to implement an operation performed by the terminal device (for example, the first vehicle) in any one of the foregoing embodiments and the possible embodiments of the foregoing embodiments.

An embodiment of this application further provides a computer program product. When the computer program product is read and executed by a computer, an operation performed by the server in any one of the foregoing embodiments and the possible embodiments of the foregoing embodiments is performed.

An embodiment of this application further provides a computer program product. When the computer program product is read and executed by a computer, an operation performed by the terminal device (for example, the first vehicle) in any one of the foregoing embodiments and the possible embodiments of the foregoing embodiments is performed.

An embodiment of this application further provides a computer program. When the computer program is executed on a computer, the computer is enabled to implement an operation performed by the server in any one of the foregoing embodiments and the possible embodiments of the foregoing embodiments.

An embodiment of this application further provides a computer program. When the computer program is executed on a computer, the computer is enabled to implement an operation performed by the terminal device (for example, the first vehicle) in any one of the foregoing embodiments and the possible embodiments of the foregoing embodiments.

An embodiment of this application further provides a system. The system includes the server described in any one of the foregoing embodiments and the possible embodiments of the foregoing embodiments. The server may be, for example, the server 210 shown in FIG. 1.

In conclusion, according to the data communication processing method and the device provided in this application, data sent by a vehicle based on various different communication protocols can be parsed at low costs and flexibly.

In this application, the terms "first", "second", and the like are used to distinguish between same or similar items whose effects and functions are basically the same. It should be understood that there is no logical or time-sequence dependency between "first", "second", and "n$^{th}$", and a quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A data communication processing method, wherein the method comprises:

   obtaining, by a server, a configuration file and an identifier of a first vehicle, wherein the configuration file is used to configure a first communication protocol, the identifier of the first vehicle is associated with the first communication protocol, and the first communication protocol is a rule for the first vehicle to collect data of the first vehicle and/or send collected data to the server; and
   searching, by the server, for the first communication protocol based on the identifier of the first vehicle.

2. The method according to claim 1, wherein the configuration file is stored in the server in a form of a preset model, and the preset model comprises expression forms of data types in a plurality of different communication protocols.

3. The method according to claim 1 or 2, wherein the method further comprises:
   determining, by the server, that the configuration file meets a preset rule, wherein the preset rule is used to determine rationality of content of the configuration file.

4. The method according to claim 3, wherein the determining, by the server, that the configuration file meets a preset rule comprises:
   determining, by the server, that a maximum value of first data in the configuration file is not greater than a specified maximum value, and determining that a minimum value of the first data is not less than a specified minimum value.

5. The method according to any one of claims 1 to 4, wherein the obtaining, by a server, a configuration file comprises:
   receiving, by the server, registration information of the first vehicle, wherein the registration information comprises the configuration file.

6. A data communication processing method, wherein the method comprises:

   obtaining, by a server, a configuration file and an identifier of a first communication protocol, wherein the configuration file is used to configure the first communication protocol, and the first communication protocol is a rule for a first vehicle to collect data of the first vehicle and/or send collected data to the server; and
   searching, by the server, for the first communication protocol based on the identifier of the first communication protocol.

7. The method according to claim 6, wherein the obtaining, by a server, an identifier of a first communication protocol comprises:
receiving, by the server, the identifier of the first communication protocol from the first vehicle.

8. The method according to claim 6 or 7, wherein the configuration file is stored in the server in a form of a preset model, and the preset model comprises expression forms of data types in a plurality of different communication protocols.

9. The method according to any one of claims 6 to 8, wherein the method further comprises:
determining, by the server, that the configuration file meets a preset rule, wherein the preset rule is used to determine rationality of content of the configuration file.

10. A data communication processing method, wherein the method comprises:
sending, by a first vehicle, an identifier of the first vehicle to a server, wherein the identifier is used to search for a first communication protocol, and the first communication protocol is a rule for the first vehicle to collect data of the first vehicle and/or send collected data to the server.

11. A data communication processing method, wherein the method comprises:
sending, by a first vehicle, an identifier of a first communication protocol to a server, wherein the identifier is used to search for the first communication protocol, and the first communication protocol is a rule for the first vehicle to collect data of the first vehicle and/or send collected data to the server.

12. A server, wherein the server comprises:

an obtaining unit, configured to obtain a configuration file and an identifier of a first vehicle, wherein the configuration file is used to configure a first communication protocol, the identifier of the first vehicle is associated with the first communication protocol, and the first communication protocol is a rule for the first vehicle to collect data of the first vehicle and/or send collected data to the server; and
a searching unit, configured to search for the first communication protocol based on the identifier of the first vehicle.

13. The server according to claim 12, wherein the configuration file is stored in the server in a form of a preset model, and the preset model comprises expression forms of data types in a plurality of different communication protocols.

14. The server according to claim 12 or 13, wherein the server further comprises:
a processing unit, configured to determine that the configuration file meets a preset rule, wherein the preset rule is used to determine rationality of content of the configuration file.

15. The server according to claim 14, wherein the processing unit is specifically configured to:
determine that a maximum value of first data in the configuration file is not greater than a specified maximum value, and determine that a minimum value of the first data is not less than a specified minimum value.

16. The server according to any one of claims 12 to 15, wherein the obtaining unit is specifically configured to:
receive registration information of the first vehicle, wherein the registration information comprises the configuration file.

17. A server, wherein the server comprises:

an obtaining unit, configured to obtain a configuration file and an identifier of a first communication protocol, wherein the configuration file is used to configure the first communication protocol, and the first communication protocol is a rule for a first vehicle to collect data of the first vehicle and/or send collected data to the server; and
a searching unit, configured to search for the first communication protocol based on the identifier of the first communication protocol.

18. The server according to claim 17, wherein the obtaining unit is specifically configured to:
receive the identifier of the first communication protocol from the first vehicle.

19. The server according to claim 17 or 18, wherein the configuration file is stored in the server in a form of a preset model, and the preset model comprises expression forms of data types in a plurality of different communication protocols.

20. The server according to any one of claims 17 to 19, wherein the server further comprises:
a processing unit, configured to determine that the configuration file meets a preset rule, wherein the preset rule is used to determine rationality of content of the configuration file.

21. A vehicle, wherein the vehicle comprises:
a sending unit, configured to send an identifier of the vehicle to a server, wherein the identifier is used to search for a first communication protocol, and the first communication protocol is a rule for the vehicle to collect data of the vehicle and/or send collected data to the server.

22. A vehicle, wherein the vehicle comprises:
a sending unit, configured to send an identifier of a first communication protocol to a server, wherein the identifier is used to search for the first communication protocol, and the first communication protocol is a rule for the vehicle to collect data of the vehicle and/or send collected data to the server.

23. A server, wherein the server comprises a processor and a memory, the memory is configured to store a computer program, and the processor is configured to execute the computer program stored in the memory, so that the server performs the method according to any one of claims 1 to 5 or any one of claims 6 to 9.

24. A vehicle, wherein the vehicle comprises a processor and a memory, the memory is configured to store a computer program, and the processor is configured to execute the computer program stored in the memory, so that the vehicle performs the method according to claim 10 or claim 11.

25. A system, wherein the system comprises one or more servers, and the server is the server according to any one of claims 12 to 16; or the server is the server according to any one of claims 17 to 20.

26. A system, wherein the system comprises one or more servers, and the server is the server according to claim 23.

27. A computer-readable storage medium, wherein the computer-readable storage medium stores a computer program, and the computer program is executed by a processor to implement the method according to any one of claims 1 to 5; or the computer program is executed by a processor to implement the method according to any one of claims 6 to 9; or the computer program is executed by a processor to implement the method according to claim 10; or the computer program is executed by a processor to implement the method according to claim 11.

28. A computer program product, wherein when the computer program product is executed by a processor, the method according to any one of claims 1 to 5 is performed; or when the computer program product is executed by a processor, the method according to any one of claims 6 to 9 is performed; or when the computer program product is executed by a processor, the method according to claim 10 is performed; or when the computer program product is executed by a processor, the method according to claim 11 is performed.

FIG. 1

FIG. 2

301: A server obtains a configuration file and an identifier of a first vehicle, where the configuration file is used to configure a first communication protocol, the identifier of the first vehicle is associated with the first communication protocol, and the first communication protocol is a rule for the first vehicle to collect data of the first vehicle and/or send collected data to the server

302: The server searches for the first communication protocol based on the identifier of the first vehicle

FIG. 3

401: A server obtains a configuration file and an identifier of a first communication protocol, where the configuration file is used to configure the first communication protocol, and the first communication protocol is a rule for a first vehicle to collect data of the first vehicle and/or send collected data to the server

402: The server searches for the first communication protocol based on the identifier of the first communication protocol

FIG. 4

| Server | | Terminal device |
|---|---|---|

501: Establish a communication connection

502: Search for a first communication protocol

503: Send a data format requirement based on the first communication protocol

504: Collect first data based on the data format requirement

505: Send the first data based on the data format requirement

506: Receive the first data and parse the first data based on the first communication protocol

FIG. 5

| Management device | | Server | | Terminal device |
| --- | --- | --- | --- | --- |

501: Establish a
communication connection

502: Search for a first
communication protocol

503: Send a data format
requirement based on the first
communication protocol

504: Collect first data based on
the data format requirement

505: Send the first data based on
the data format requirement

506: Receive the first data and
parse the first data based on the
first communication protocol

507: Send a status query
request of the terminal device

508: Obtain status information
of the terminal device based on
the status query request

509: Send the status information
of the terminal device

FIG. 6

FIG. 7

| Management device | | Server |
|---|---|---|

801: Send registration information of a terminal device, where the registration information includes an identifier of the terminal device and a first communication protocol

802: Complete registration based on the registration information, generate an identifier of the first communication protocol, and store the identifier of the terminal device, the identifier of the first communication protocol, and the first communication protocol in association

803: Send registration response information

FIG. 8

Apparatus 900

Obtaining unit — 901

Searching unit — 902

FIG. 9

Apparatus 1000

Obtaining unit    1001

Searching unit    1002

FIG. 10

Apparatus 1100

Sending unit    1101

Storage unit    1102

FIG. 11

Apparatus 1200

Sending unit    1201

Storage unit    1202

FIG. 12

Device 1300

1301

Processor

1303

Communication
interface

1304

1302

Memory

FIG. 13

Device 1400

1401

Processor

1403

Communication
interface

1404

1402

Memory

FIG. 14

Device 1500

1501

Processor

1503

Communication
interface

1504

1502

Memory

FIG. 15

## INTERNATIONAL SEARCH REPORT

| International application No. |
|---|
| **PCT/CN2021/133280** |

### A. CLASSIFICATION OF SUBJECT MATTER

H04L 67/00(2022.01)i

According to International Patent Classification (IPC) or to both national classification and IPC

### B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 车辆, 标识, 配置, 协议, 车联网, 物联网, 车辆物联网, 服务器, vehicle, identification, ID, configuration, protocol, internet of things, vehicle network, server

### C. DOCUMENTS CONSIDERED TO BE RELEVANT

| Category* | Citation of document, with indication, where appropriate, of the relevant passages | Relevant to claim No. |
|---|---|---|
| X | CN 103428627 A (CHINA MOBILE GROUP JIANGSU COMPANY LIMITED) 04 December 2013 (2013-12-04)<br>description paragraphs [0039]-[0090], figures 1-6 | 1-28 |
| X | CN 112019609 A (SHENZHEN INOVANCE TECHNOLOGY CO., LTD.) 01 December 2020 (2020-12-01)<br>description paragraphs [0003], [0050]-[0089], figures 1-4 | 1-28 |
| A | CN 110722947 A (LAUNCH TECH. CO., LTD.) 24 January 2020 (2020-01-24)<br>entire document | 1-28 |
| A | CN 106559337 A (ZTE CORPORATION) 05 April 2017 (2017-04-05)<br>entire document | 1-28 |
| A | US 2014195102 A1 (MARTIN D. NATHANSON) 10 July 2014 (2014-07-10)<br>entire document | 1-28 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 January 2022** | **23 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2021/133280**

| Patent document cited in search report | | | Publication date (day/month/year) | Patent family member(s) | | | Publication date (day/month/year) |
|---|---|---|---|---|---|---|---|
| CN | 103428627 | A | 04 December 2013 | None | | | |
| CN | 112019609 | A | 01 December 2020 | None | | | |
| CN | 110722947 | A | 24 January 2020 | None | | | |
| CN | 106559337 | A | 05 April 2017 | WO | 2017049870 | A1 | 30 March 2017 |
| US | 2014195102 | A1 | 10 July 2014 | US | 2020329423 | A1 | 15 October 2020 |
| | | | | US | 2017034774 | A1 | 02 February 2017 |
| | | | | US | 2015319681 | A1 | 05 November 2015 |
| | | | | WO | 2014118647 | A2 | 07 August 2014 |
| | | | | EP | 2944101 | A2 | 18 November 2015 |
| | | | | US | 2019069225 | A1 | 28 February 2019 |
| | | | | CA | 2930764 | A1 | 07 August 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110206223